# FASCICULE DE BREVET EUROPEEN

(11) **EP 1 172 047 B1**
(45) Date de publication et mention de la délivrance du brevet: **15.02.2006**
(21) Numéro de dépôt: 01401841.0
(22) Date de dépôt: 10.07.2001
(51) Int. Cl.: A47B 31/02, A47J 39/00

(54) **Chariot de distribution de plateau repas a plaque de renseignement**
Speisentransportwagen mit plattenförmigem Informationsträger
Food service cart with information-carrying plaque

(30) Priorité: 11.07.2000 FR 0009037
(43) Date de publication de la demande: 16.01.2002
(73) Titulaire: ISECO, 10130 Saint-Phal (FR)
(72) Inventeur: Fabre, Jean, 10000 Troyes (FR); Meyer, Jean-Christophe, 10120 St-André-Les-Vergers (FR)
(74) Mandataire: Eidelsberg, Victor Albert

(56) Documents cités:
- EP-A- 0 055 683
- US-A- 4 323 110
- US-A- 5 243 171
- US-A- 5 797 445
- US-A- 5 875 430

## Description

Les chariots de plateau repas sont utilisés dans les collectivités, notamment dans les hôpitaux, les prisons, les écoles, les avions, les trains, pour fournir des repas aux personnes de la collectivité.

Un chariot comprend un châssis de réception de plateau repas et un dispositif de chauffage des plateaux, permettant de remettre en température tout ou partie des repas des plateaux. Le dispositif de chauffage est commandé par une commande électronique. Bien que ce ne soit pas le cas des chariots décrits aux US-A- 5 243 171 et 4 323 110 dont la notion d'amovibilité est absente, chaque chariot peut comporter bien en vue une plaque de renseignement montée de manière amovible sur le châssis. Cette plaque de renseignement indique notamment le lieu de destination du chariot. On met cette plaque sur le chariot en cuisine. L'opérateur, souvent un simple manoeuvre, chargé de pousser le chariot, n'a qu'à lire la plaque de renseignement, pour savoir où il doit se rendre en sorte que les repas préparés pour certaines personnes leurs soient bien livrés.

Souvent, les contraintes de service les dimanches et les jours fériés diffèrent de celles des jours ouvrables. La composition des plateaux peut différer et nécessiter un programme de chauffage différent. L'heure à laquelle sont pris les repas diffère d'un jour férié à un jour ouvrable. L'opérateur doit commander la commande électronique du dispositif de chauffage et de refroidissement pour qu'elle fonctionne comme il convient et au bon moment. Ces opérations ne sont pas à la portée d'un manoeuvre.

L'invention remédie à cet inconvénient par un chariot de distribution de plateau repas dont le lieu de destination peut être fixé, mais dont aussi le programme de chauffage peut être fixé à l'avance en cuisine, sans que l'opérateur chargé de le pousser ait à vérifier le contenu des plateaux repas, les personnes auxquelles les repas sont destinées et les durées de mise en fonctionnement du dispositif de chauffage ou de refroidissement.

Suivant l'invention, la plaque de renseignement comporte une plaquette à circuit imprimé, reliée à la commande électrique de manière à lui donner des instructions.

La plaque de renseignement conserve ainsi son rôle d'indication du lieu auquel le chariot doit être apporté mais elle a en outre le rôle de donner des instructions à la commande électronique, et notamment de lui indiquer l'instant où doit commencer le chauffage ainsi que le profil du chauffage, les plateaux repas ou la partie des plateaux repas que le chauffage doit concerner, toutes ces opérations pouvant être prévues à l'avance sur une carte adéquate qui est mise sur le chariot en cuisine en sorte que l'on n'a plus a craindre les erreurs qui se produisaient habituellement lorsqu'il fallait confier ces opérations au manoeuvre chargé simplement de pousser le chariot à son lieu de destination.

Suivant un mode de réalisation, la plaque porte également en clair une information correspondant aux instructions que la plaquette donne à la commande. On peut ainsi vérifier, après avoir mis la plaque, que l'on ne s'est pas trompé et qu'elle correspond bien à ce que l'on souhaite. Le plus souvent, cette information est simplement une couleur donnée à la plaque, le rouge étant réservé, par exemple, aux jours ouvrables et le bleu aux jours fériés. De la même façon, la plaque porte en clair l'information de destination du chariot, cette information pouvant être s'effectuée également au moyen d'une couleur de toute ou partie de la plaque, par exemple la moitié de la plaque sera verte pour la maternité et orange pour le service de chirurgie.

La liaison de la plaquette à circuit imprimé à la commande électronique peut s'effectuer par une simple connexion électrique. Mais on préfère un procédé sans contact dans lequel la plaquette de renseignement comporte un transpondeur qui émet des signaux à une certaine fréquence, notamment de 125 kHz, tandis que la commande comporte une antenne apte à recevoir ces signaux et à les transmettre au reste de la commande électronique.

Au dessin annexé donné uniquement à titre d'exemple :

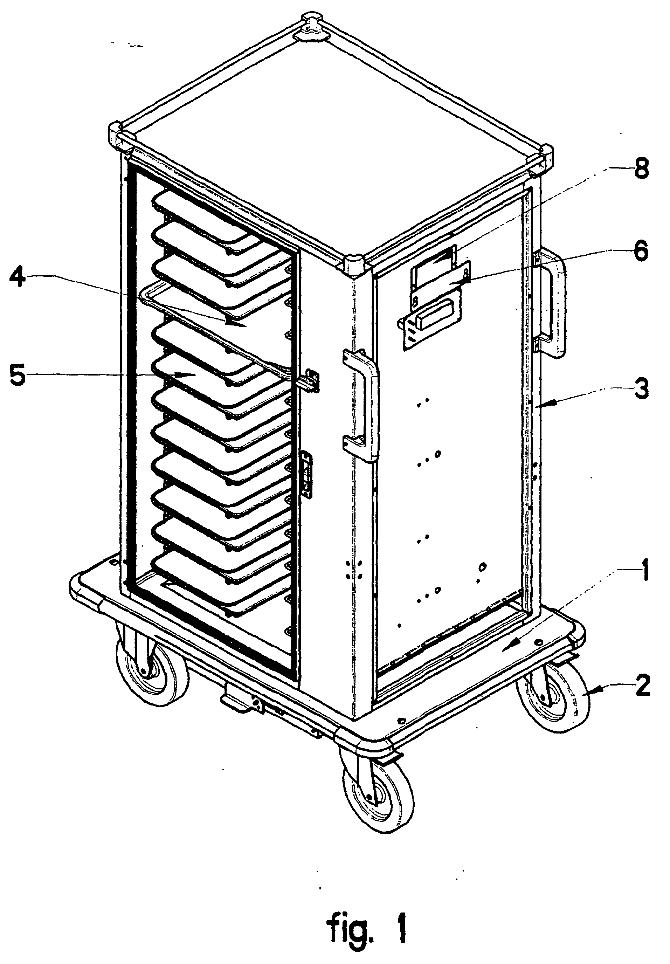

la figure 1 est une vue en perspective d'un chariot suivant l'invention, tandis que

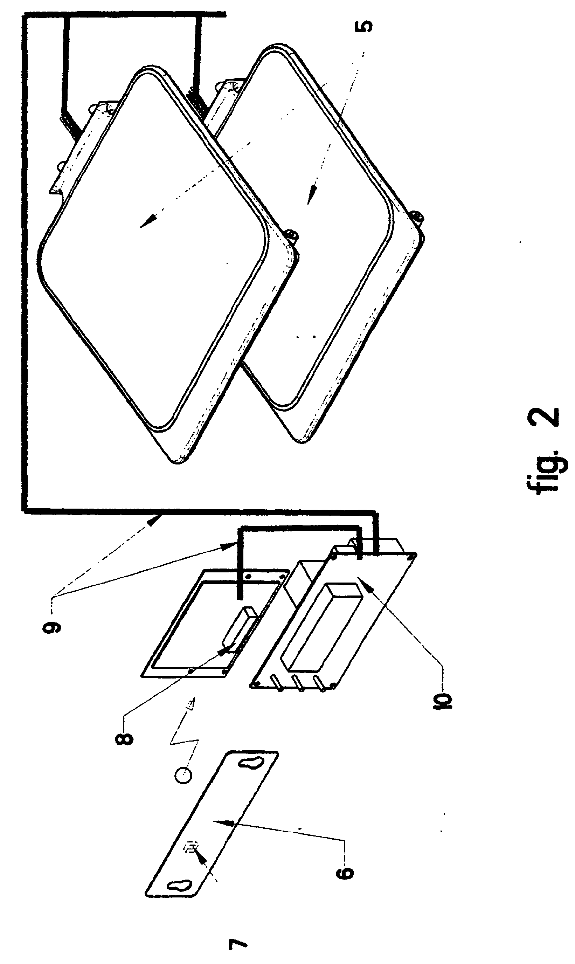

la figure 2 en illustre le schémas électrique.

Le chariot représenté au dessin comporte un socle 1 porté par des roulettes 2. Du socle 1 s'élève un châssis 3 de réception de plateau repas 4. Ce châssis comporte une porte qui n'est pas représentée et qui peut être fermée de manière à ce que la température à l'intérieur du chariot reste autant que possible égale à celle que l'on a prévue, étant entendu que la température peut varier d'un plateau repas à l'autre et même d'une partie d'un plateau repas à l'autre, grâce à des dispositifs de chauffage 5 et/ou de réfrigération qui sont embarqués sur le chariot.

Sur l'une des faces du chariot est montée de manière amovible une plaque 6 de renseignement sur laquelle est apposée en clair le lieu de destination du chariot ainsi que l'heure à laquelle la remise en température du chariot doit s'effectuer, la durée pendant laquelle doit s'effectuer cette remise en température et la puissance à transmettre, les consignes de référence pour les produits à remettre en température ou à maintenir froid ainsi que toute autre instruction souhaitable. Ces mêmes instructions sont mémorisées dans une plaquette 7 à circuit imprimé faisant office de transpondeur qui est fixée à la plaque 6. Lorsque la plaque 6 est placée sur le chariot, le transpondeur 7 vient à proximité d'une antenne 8 apte à recevoir les signaux émis par le transpondeur. Ces signaux sont transmis par un circuit électrique 9 à une commande 10 électronique, du dispositif de chauffage 5 et/ou du dispositif de réfrigération et/ou d'une horloge déterminant l'instant auquel le dispositif 5 doit entrer en action et sa durée de fonctionnement.

Le chariot suivant l'invention fonctionne de la manière suivante : lorsque des plateaux repas doivent être envoyés un jour de semaine au service de chirurgie, on charge en cuisine un chariot suivant l'invention des plateaux repas adéquats et l'on met sur ce chariot la plaque 6 qui, d'une part, porte en clair l'indication du service de chirurgie et, d'autre part, éventuellement aussi en clair mais en tout cas sur la carte 7 imprimée, toutes les indications nécessaires au chauffage et à la réfrigération des plateaux 4 un jour de semaine. Cette carte a une première couleur qui correspond à une livraison à effectuer un jour de semaine au service de chirurgie. Si l'on est un dimanche, c'est une carte d'une autre couleur qui est mise à la place de la carte précédente. Si le chariot doit être livré à la maternité, c'est une autre carte encore d'une autre couleur qui est mise sur le chariot, la couleur étant différente suivant qu'on est un jour ouvrable ou un jour férié.

La personne chargée de pousser le chariot n'a qu'à lire le lieu de destination et n'a plus à pianoter sur un ordinateur pour déterminer en fonction des lieux de destination et des jours ouvrables ou non et d'autres critères la manière dont la commande électronique doit recevoir des instructions.

## Revendications

1. Chariot comprenant un châssis (3) de réception de plateaux-repas (4), un dispositif (5) de chauffage des plateaux-repas (4), une commande (10) électronique du dispositif (5) de chauffage et une plaque (6) de renseignement montée de manière amovible sur le châssis (3) et sur laquelle est apposée une information en clair, **caractérisé en ce que** la plaque (6) de renseignement comporte une plaquette (7) à circuit imprimé reliée à la commande (10) électronique de manière à lui donner des instructions.

2. Chariot suivant la revendication 1, **caractérisé en ce que** la commande (10) a une antenne (8) et la plaquette (7) émet des signaux de fréquence qui sont reçus par l'antenne (8).

3. Chariot suivant la revendication 1 ou 2, **caractérisé en ce que** la plaque (6) porte en clair une information de destination du chariot.

4. Chariot suivant l'une des revendications précédentes, **caractérisé en ce que** la plaque (6) porte en clair une information correspondant aux instructions que la plaquette (7) donne à la commande (10).

5. Chariot suivant l'une des revendications précédentes, **caractérisé en ce que** la plaque (6) a une couleur différente suivant la destination du chariot et/ou les instructions qu'elle donne à la commande (10).

6. Chariot suivant l'une des revendications précédentes, **caractérisé en ce que** les instructions données par la plaquette (7) à la commande sont des instructions de destination du chariot.

7. Chariot suivant l'une des revendications précédentes, **caractérisé en ce que** les instructions données par la plaquette (7) à la commande sont des instructions de chauffage, notamment de l'instant où doit commencer le chauffage, du profil du chauffage, et/ou des plateaux repas concernés par le chauffage.

## Claims

1. Trolley comprising a frame (3) for receiving meal trays (4), a device (5) for heating the meal trays (4), an electronic control (10) of the heating device (5) and an information plate (6) mounted removably on the frame (3) and on which uncoded information is placed, **characterized in that** the information plate (6) comprises a printed circuit board (7) connected to the electronic control (10) so as to give it instructions.

2. Trolley according to Claim 1, **characterized in that** the control (10) has an antenna (8) and the circuit board (7) emits frequency signals that are received by the antenna (8).

3. Trolley according to Claim 1 or 2, **characterized in that** the plate (6) supports uncoded information on the destination of the trolley.

4. Trolley according to one of the preceding claims, **characterized in that** the plate (6) supports uncoded information corresponding to the instructions that the circuit board (7) gives to the control (10).

5. Trolley according to one of the preceding claims, **characterized in that** the plate (6) has a different colour depending on the destination of the trolley and/or the instructions that it gives to the control (10).

6. Trolley according to one of the preceding claims, **characterized in that** the instructions given by the circuit board (7) to the control are instructions concerning the destination of the trolley.

7. Trolley according to one of the preceding claims, **characterized in that** the instructions given by the circuit board (7) to the control are heating instructions, particularly of the moment when heating should begin, of the heating profile, and/or of the meal trays involved with the heating.

## Patentansprüche

1. Wagen mit einem Gestell (3) zur Aufnahme von Tabletts (4) mit Speisen, einer Einrichtung (5) zum Erwärmen der Tabletts (4) mit Speisen, einer elektronischen Steuerung (10) für die Einrichtung (5) zum Erwärmen und einem Beschriftungsschild (6), das abnehmbar am Gestell (3) angebracht ist und Angaben im Klartext trägt, **dadurch gekennzeichnet, dass** das Beschriftungsschild (6) mit einer Schaltplatine (7) versehen ist, die mit der elektronischen Steuerung (10) verbunden ist, um Anweisungen an diese zu geben.

2. Wagen nach Anspruch 1,
**dadurch gekennzeichnet, dass** die Steuerung (10) eine Antenne (8) hat und die Schaltplatine (7) Signale einer bestimmten Frequenz abgibt, die von der Antenne (8) empfangen werden.

3. Wagen nach Anspruch 1 oder 2,
**dadurch gekennzeichnet, dass** auf dem Beschriftungsschild (6) der Bestimmungsort des Wagens im Klartext angegeben ist.

4. Wagen nach einem der vorhergehenden Ansprüche,
**dadurch gekennzeichnet, dass** das Beschriftungsschild (6) im Klartext Angaben trägt, die den Anweisungen entsprechen, die die Platine (7) der Steuerung (10) gibt.

5. Wagen nach einem der vorhergehenden Ansprüche,
**dadurch gekennzeichnet, dass** das Schild (6) je nach Bestimmungsort des Wagens bzw. den Anweisungen, die es an die Steuerung (10) gibt, eine andere Farbe hat.

6. Wagen nach einem der vorhergehenden Ansprüche,
**dadurch gekennzeichnet, dass** die von der Platine an die Steuerung gegebenen Anweisungen Anweisungen betreffend den Bestimmungsort des Wagens sind.

7. Wagen nach einem der vorhergehenden Ansprüche,
**dadurch gekennzeichnet, dass** die von der Platine (7) gegebenen Anweisungen Anweisungen sind, die das Erwärmen, insbesondere den Heizbeginn, das Heizprofil und/oder die Tabletts mit Speisen, die zu erwärmen sind, betreffen.
